# Europäisches Patentamt
# European Patent Office
# Office européen des brevets

(19)

(11) Veröffentlichungsnummer: **0 080 654**
**B1**

(12) **EUROPÄISCHE PATENTSCHRIFT**

(45) Veröffentlichungstag der Patentschrift:
**19.03.86**

(21) Anmeldenummer: **82110615.0**

(22) Anmeldetag: **18.11.82**

(51) Int. Cl.⁴: **F 16 L 23/00**

(54) Spritz-Schutzring für Rohrflansche.

(30) Priorität: **26.11.81 DE 3146803**

(43) Veröffentlichungstag der Anmeldung:
**08.06.83 Patentblatt 83/23**

(45) Bekanntmachung des Hinweises auf die Patenterteilung:
**19.03.86 Patentblatt 86/12**

(84) Benannte Vertragsstaaten:
**AT BE CH FR GB IT LI NL SE**

(56) Entgegenhaltungen:
**DE - A - 2 923 259**
**FR - A - 2 055 128**
**US - A - 3 113 790**

(73) Patentinhaber: **Ernst, Manfred, Georg August Zinn-Strasse 29, D-6054 Rodgau 2 (DE)**

(72) Erfinder: **Ernst, Manfred, Georg August Zinn-Strasse 29, D-6054 Rodgau 2 (DE)**

(74) Vertreter: **Eyer, Eckhardt Philipp, Dipl.-Ing. et al, Patentanwälte Eyer & Linser Robert-Bosch-Strasse 12a, D-6072 Dreieich (DE)**

**Beschreibung**

Die Erfindung betrifft einen Spritzschutzring für Rohrflansche aus einem die Flanschblätter einer Rohrverbindung umspannenden, den Flanschspalt überdeckenden Spannband.

Spritzschutzringe dienen der Sicherung der Umgebung von giftige oder brennbare oder anderweitig gefährliche Flüssigkeiten führenden Rohrleitungen und sich in deren Nachbarschaft aufhaltenden Personen gegen Schädigung durch die unter Druck ausströmende Flüssigkeit im Falle eines Dichtungsbruches. Ihre Aufgabe ist es, die im Falle eines derartigen Dichtungsbruches im allgemeinen in einem weitreichenden Strahl austretende Flüssigkeit derart zu beruhigen, daß die Flüssigkeit in einem nur geringen Bereich um die Bruchstelle herum abläuft. Die Verwendung derartiger Spritzschutzringe an gefährliche Flüssigkeiten führenden Rohrleitungen ist gesetzlich vorgeschrieben, die bekannten Spritzschutzringe vermögen die ihr zugedachte Aufgabe jedoch nicht zu erfüllen.

Ein bekannter Spritzschutzring der eingangs beschriebenen Art besteht aus einem glatten Streifen einer Dicke zwischen 0,5 und 1,5 mm, der aus Bandmaterial aus verzinktem Stahlblech, stärkerem Kunststoffmaterial, etwa auf der Basis von Polypropylen oder Polyäthylen, besteht und mit einem gesonderten Befestigungselement, etwa Blechschrauben, Maschinenschrauben, Stiften, Nieten, Spannhügeln oder dergl. direkt auf der Flanschverbindung befestigt wird. Bei einer weiteren bekannten Ausführungsform eines Spritzschutzringes ist bei im übrigen gleicher Ausbildung und Befestigungsweise anstelle eines glatten Bandes ein wellenförmiges Band vorgesehen.

Keine der beiden Ausführungsformen eines Spritzschutzringes vermag die ihr zugedachte Funktion zu erfüllen. Im Falle der von einem glatten Band gebildeten Ausführungsform füllt sich nach einem Dichtungsbruch der zwischen der Dichtung, dem Spritzschutzring und den Flanschen umschlossene Raum unmittelbar mit Flüssigkeit, worauf sich in diesem Raum unter dem Austrittsdruck eine Flüssigkeitsströmung mit hoher kinetischer Energie ausbildet und die Flüssigkeit mit entsprechend hoher kinetischer Energie an einer Öffnung zwischen Flansch und Spritzschutzring austritt. Zu dem im Ergebnis gleichen Resultat einer weiten Verbreitung der Flüssigkeit im Falle eines Dichtungsbruches führt der Einsatz der von einem Wellenband gebildeten Ausführungsform eines Spritzschutzringes. in diesem Falle trifft die an der Öffnung austretende Flüssigkeit je nach Lage des Bruches auf ein Wellental oder mehrere Wellentäler, wird dort um 90° umgelenkt und tritt gebündelt in wiederum scharfem Strahl durch den Freiraum zwischen den Flanschblättern und dem gewellten Spritzschutzring aus. Die Verhinderung der Bildung eines scharfen Strahles als angestrebtes Ziel der Spritzschutzringe wird somit weder im einen noch im anderen Fall erreicht.

Den bekannten Spritzschutzringen ist darüber hinaus ein weiterer Nachteil gemeinsam. Die Montage mittels dritter Befestigungsmittel ist umständlich und zeitlich aufwendig. Außerdem wird die Gefahr begründet, daß die Anbringung des Befestigungsmittels, etwa Schrauben, zumindest teilweise ganz unterbleibt, wenn etwa eine Schraube verlustig gegangen oder wegen Korrosion unbrauchbar geworden ist und der Monteur einen passenden Ersatz nicht zur Hand hat.

Es ist weiterhin ein Spritzschutzring für mit einem Bund und einem Überwurfflansch versehene Rohrverbindungen bekannt, der auf beiden Seiten eine Bördelscheibe aufweist, die mittels des Bundes unter Vermittlung eines Spannringes gegen eine innere Eindrehung des Überwurfringes gespannt gehalten ist (DE-A-2.923.259). Bei dieser Anordnung füllt sich nach einem Dichtungsbruch der von der Dichtung, dem Spritzschutzring und den Flanschringen umschlossene Raum mit Flüssigkeit, worauf sich in diesem Raum ein dem Leitungsdruck entsprechender Druck aufbaut, unter dessen Wirkung die Flüssigkeit mit hoher kinetischer Energie austritt.

Der vorliegenden Erfindung liegt als Aufgabe die Schaffung eines Spritzschutzringes zugrunde, der ein absolut spritzfreies Austreten der unter Leitungsdruck stehenden Flüssigkeit aus Rohrleitungen im Falle eines Dichtungsbruches gewährleistet und die Erfindung besteht darin, daß der zwischen dem Spannband, den Flanschblättern und der Flanschdichtung eingeschlossene Raum durch Schikanen in miteinander derart verbundene Teilräume unterteilt ist, daß die infolge Dichtungsbruches zwischen den Flanschblättern ausströmende Flüssigkeit unter Umlenkung durch die Schikanen im Übergangsbereich zwischen den Räumen in einander entgegengerichtete und/oder sich kreuzende Teilströme geteilt wird.

Durch die Erfindung ist ein Spritzschutzring geschaffen, mit dessen Hilfe die der Flüssigkeit beim Austritt aus der Rohrleitung inhärente kinetische Strömungsenergie in dem von dem Spannband begrenzten Raum stufenweise dadurch weitestgehend abgebaut wird, daß die Flüssigkeit mehrfach an Ausströmkanten und Prallflächen in Teilströme umgelenkt und durch entsprechende Kanalbildungen in einander entgegengerichtete oder sich zumindest kreuzende Ströme gelenkt wird, bis sie schließlich praktisch drucklos zwischen dem Spannband und den Flanschen ausfließt. Die Bildung eines energiereichen, gebündelten Strahles oder ein Abspritzen der Flüssigkeit infolge des Aufpralls eines energiereichen Strahles an einer freien Prallwand sind zuverlässig vermieden.

In einer - insbesondere zur Herstellung aus Metall geeigneten - Ausführungsform der Erfindung ist das Spannband von einem gestreckten Federstahlband gebildet, das mit einem im wesentlichen C-förmigen Federband versehen ist, das auf etwa seiner Mittellinie derart an dem Spannband befestigt ist, daß es sich bei der Montage mit seinen Wölbungen beidseitig federnd gegen die inneren Flanschflächen anlegt, wobei das Federband beidseitig ausgehend von den freien Federbandkanten mit einer Vielzahl sich bis über die Abstützlinie hinaus erstreckenden Schlitzen versehen ist. Bei dieser Ausführungsform werden die Schlitze durch das Spannen des Spannbandes um die Flansche durch Gegeneinanderlegen oder gegebenenfalls sogar - bei entsprechend kleindurchmessrigen Flanschen - Übereinanderlegen der Schlitzrandenden teilweise geschlossen und Durchströmöffnungen gebildet, die sich beidseitig der Abstützlinie erstrecken, so daß zwischen Spannband, C-Form-Federband und Flanschblatt ein Raum abgeteilt wird, in den die Flüssigkeit in sich kreuzenden bzw. gegeneinandergerichteten Strömen über die - gemeinsame - Durchströmöffnung zufließt.

Dasselbe Ergebnis wird mit einer - insbesondere zur Herstellung aus Kunststoff geeigneten - Ausführungsform erreicht, bei der ein zu einem offenen Ring vorgebogenes Spannband vorgesehen und das C-Form-Federband anstelle von Schlitzen mit seitlichen Durchbrechungen versehen ist.

In einer weiteren vorteilhaften Ausführungsform ist das Spannband beidseitig parallel zum C-Form-Federband mit rundumlaufenden Nuten versehen, in denen die vom inneren "Entspannungsraum" ins Freie übertretende Flüssigkeit noch mehrfach umgelenkt bzw. verwirbelt und somit ein weiterer Abbau des Druckes und der kinetischen Energie erreicht wird. Die Nuten können - etwa bei Ausführung des Spannbandes aus Bandstahl - in Form gewalzter Sicken oder - bei Ausführung des Spannbandes aus Kunststoff - in Form eingeformter Rillen angebracht sein.

Zur Vereinfachung der Montage ist vorteilhaft das Spannband an seinem einen Ende mit einer sich im wesentlichen über die gesamte Spannbandbreite erstreckenden federnden Rastnase und an seinem anderen Ende mit einem Schlitzraster versehen, der vorteilhaft in einem solchen Abstand vom Spannbandende angeordnet ist, daß das freie Bandende mindestens der Länge des Schlitzrasters entspricht. Es ist auf diese Weise eine werkzeuglose und keine Drittbefestigungsmittel (Schrauben) erfordernde Montage möglich, wobei durch die C-Form-Federleiste ein seitliches Ausweichen verhindert, weiterhin durch die mittels der Federnase bewirkte Elastizität der Halterung des Spannbandes eine flexible Aufnahme plötzlich stoßartig auftretender Belastungen sowie schließlich durch die weite Überlappung der Spannbandenden ungeachtet derart stoßartig auftretender Belastungen eine sichere Halterung des Bandes auf dem Flansch gewährleistet ist.

Sowohl der Abbau kinetischer Energie als auch die sichere Halterung des Spritzschutzringes auf den Flanschen können noch weiterhin wesentlich verbessert werden dadurch, daß das Spannband in der Mittelzone mit einer Sicke einer die Flanschspaltbreite unterschreitenden Breite versehen ist, an der das Federband befestigt ist. Es wird hierdurch einerseits die Halterung des Ringes zwischen den Flanschen verbessert und andererseits die für die Vernichtung der kinetischen Strömungsenergie wesentlich verantwortliche innere Umlenkkammer vergrößert.

Die Erfindung ist in der Zeichnung beispielsweise veranschaulicht. Es zeigen

Fig. 1 die Seitenansicht eines Spritzschutzringes mit Bandstahl-Spannband gemäß Erfindung

Fig. 2 eine Sicht von oben auf Fig. 1

Fig. 3 einen Schnitt durch einen Spritzschutzring nach seiner Montage

Fig. 4 eine perspektivische Darstellung des C-Form-Federbandes

Fig. 5 eine teilweise Seitenansicht des C-Form-Federbandes nach der Montage

Fig. 6 eine vergrößerte Darstellung des Spannbandendes mit federnder Rastnase

Fig. 7 eine vergrößerte Teildarstellung des Spritzschutzringes nach der Montage im Bereich des Spannendes

Fig. 8 eine Ausführung eines Spritzschutzringes aus Kunststoffmaterial

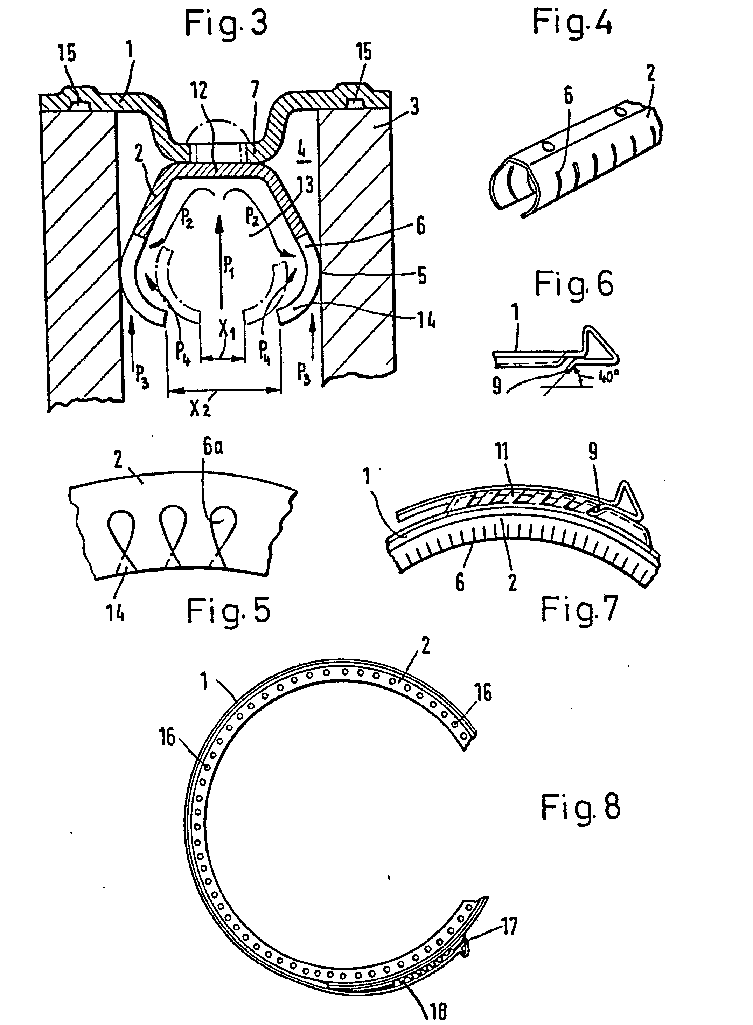

In der Zeichnung ist mit 1 ein - gestrecktes - Spannband aus Bandstahl bezeichnet, das erfindungsgemäß mit einem im wesentlichen C-förmigen, in sich federnden Band 2 versehen ist, das auf etwa seiner Mittellinie bzw. Mittenzone derart an dem Spannband 1 befestigt ist, daß es sich bei der Montage - siehe Fig. 3 - federnd gegen die Innenflächen der Flansche 3 legt und zwischen den Flanschen 3, dem C-Form-Federband 2 und dem Spannband 1 zwei Ringräume 4 sowie ein Umlenkraum 13 abgeteilt sind, wobei das Federband - beidseitig - ausgehend von den freien Randkanten mit sich bis über den Bereich der Abstützlinien 5 erstreckenden Schlitzen 6 versehen ist. In der dargestellten Ausführungsform sind die Schlitze im wesentlichen rechtwinklig zur Randkante in das Federband eingebracht, sie können jedoch mit einigen Vorteilen bei der Montage und in Bezug auf die strömungstechnischen Belange auch winkelig zur Randkante eingebracht sein. Bei Ausführung des Spritzschutzringes aus Kunststoff, bei der das Spannband vorteilhaft die Form eines vorgeformten, offenen Ringes besitzt, sind anstelle der sich bei der Biegung des Spannbandes teilweise schließenden Schlitze einfache Durchbohrungen vorgesehen.

Das Spannband ist - siehe insbes. Fig. 3 - mit einer Sicke 7 versehen, die im dargestellten Beispiel eine die Breite des Flanschspaltes unterschreitende Breite besitzt, wodurch einerseits die Führung bzw. Halterung des Spritzschutzringes zwischen den Flanschen verbessert und insbesondere andererseits die Lage des C-Form-Federbandes weiter gegen die Mitte des Rohrflansches in Richtung auf die Rohrdichtung verlegt wird unter entsprechender Vergrößerung des für den Abbau der kinetischen Energie des im Falle eines Dichtungsbruches ausströmenden Mediums maßgeblichen Kammer 4.

Das Spannband 1 weist weiterhin beidseitig des C-Form-Federbandes 2 Nuten 15 auf, die im dargestellten Beispiel eines Bandstahl-Spannbandes in Form eingewalzter Sicken eingebracht sind, bei Ausführung des Spannbandes aus Kunststoff jedoch bei der Herstellung innen, d.h. auf der den Flanschblättern 3 zugekehrten Seite mit eingespritzt werden können. Es wird hierdurch auf dem Strömungsweg der Flüssigkeit zwischen den Räumen 4 und der äußeren Umgebung durch Umlenkung und Verwirbelung nochmals ein Druck- bzw. Geschwindigkeitsabbau erreicht.

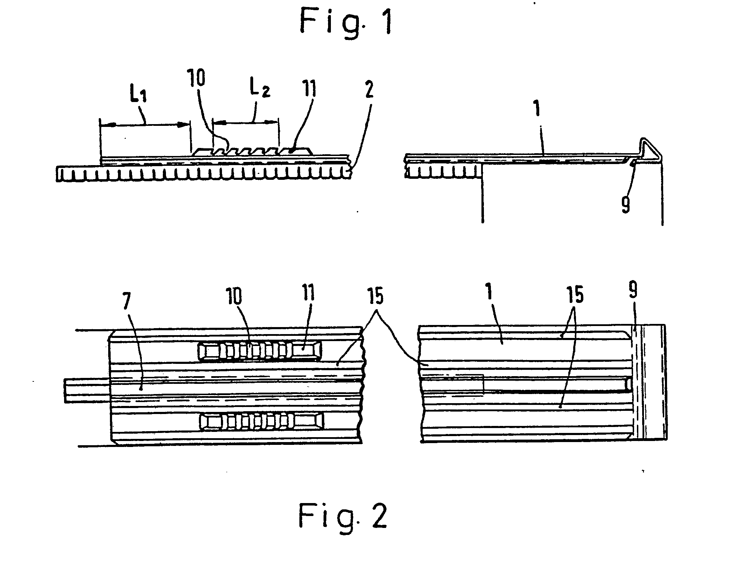

Das Spannband 1 ist - siehe auch Fig. 6 - an seinem Ende mit einer aus einem Stück aus Spannband gebogenen und daher federnden Rastnase 9 versehen, die sich - siehe Fig. 2 - im dargestellten Beispiel über die gesamte Bandbreite erstreckt und mit zwei beidseitig der Sicke 7 angeordneten jeweils sechs Schlitzen 10 aufweisenden Schlitzraster 11 am anderen Bandende zusammenwirkt. Die Schlitze weisen eine Neigung von etwa 35 bis 40 Grad, bezogen auf die horizontale Ringmantelebene auf und bilden Rasten für die Rastnasen 9. Hierbei ist der Schlitzraster in einem solchen Abstand vom Spannbandende angebracht, daß die Länge $L_1$ des freien Bandendes mindestens der Länge $L_2$ des Schlitzrasters 11 entspricht (Fig. 1).

Zur Montage des Spritzschutzbandes wird zunächst das C-Form-Federband in den Flanschspalt eingeschoben und das Spannband um den Flanschumfang gelegt, wobei einerseits aufgrund der federnden Eigenschaften des C-Form-Bandes durch mehr oder weniger starkes Einfedern der beiden seitlichen C-Form-Schenkel ein Toleranzausgleich unterschiedlicher Flanschspaltbreiten etwa im Umfang $X_1/X_2$ - siehe Fig. 3 - und andererseits durch die Führung der Schlitze 6 bis in die Nähe des Mittelbereiches 12 des C-Form-Federbandes eine Biegung des Spannbandes um den Flanschumfang ermöglicht wird. Durch das je nach Flanschspalt-Breite mehr oder weniger weite Einbiegen der Federbandenden 14 beim Einschieben zwischen die Flansche wird eine gegen die - nicht dargestellte - Dichtung hin schlitzförmig geöffnete Kammer 13 abgeteilt, während sich durch das Spannen des Spannbandes um die Flansche 3 die Schlitze 6 durch Gegeneinanderlegen oder gegebenenfalls sogar - bei entsprechend kleindurchmessrigen Flanschen - Übereinanderlegen der Schlitzrandenden in der in Fig. 5 schematisch zur Veranschaulichung überzeichnet dargestellten Weise teilweise schließen und eine Durchströmöffnung 6a bilden, die sich im wesentlichen nur beidseitig der Abstützlinien 5 erstreckt.

Es wird nunmehr durch federndes Aufbiegen der Rastnase 9 und Einführen in einen geeigneten Schlitz 10 des Schlitzrasters 11 der Spritzschutzring unter Spannung fest um die Flansche geschlossen.

Im Falle eines Dichtungsbruches strömt das aus dem Rohr austretende Medium zunächst einerseits teilweise entsprechend Pfeil $P_1$ in den Raum 13 ein und trifft teilweise entsprechend Pfeil $P_3$ gegen die eine Anströmkante bildenden geschlossenen Enden 14 des C-Form-Federbügels bzw. in den zwischen dem Ende 14 und dem Flansch eingeschlossenen Raum ein. Beide Ströme erfahren infolgedessen durch Aufprall und Umlenkung bereits eine erhebliche Bremsung und entsprechend Verringerung ihrer kinetischen Energie. Die entsprechend Pfeil $P_1$ gegen die Prallfläche 12 geströmte Flüssigkeit wird entsprechend Pfeil $P_2$ gegen die Schlitze 6 umgelenkt und strömt auf diesem Wege der entsprechend Pfeil $P_4$ direkt in Richtung der Schlitze 6 strömenden Flüssigkeit entgegen. Durch dieses Entgegenströmen wird ein weiterer Teil der kinetischen Strömungsenergie vernichtet. Die hierdurch bereits verlangsamte Flüssigkeit tritt nun in den Raum 4 über und trifft bei dem Übertritt auf die entsprechend Pfeil $P_3$ entlang der Flanschwand durch den offenen Teil der Schlitze 6 direkt in den Raum 4 einströmende Flüssigkeit. Da beide Ströme eine sich kreuzende bis einander entgegengerichtete Strömungsrichtung aufweisen, wird die in ihnen noch enthaltene kinetische Energie zum wesentlichen Teil vernichtet, welche Wirkung noch dadurch verstärkt wird, daß die Flüssigkeit beim Übertritt in einen ungefüllten Raum (Raum 4) einströmt, aus dem sie unmittelbar druckfrei abfließen kann. Eine Füllung des Raumes 4 und ein Druckaufbau als Grundlage für die Bildung eines gebündelten weiterreichenden Strahles tritt nicht ein, die Flüssigkeit quillt vielmehr druck- und geschwindigkeitslos aus, wobei evtl. verbliebene Restströmungsenergie in den Nuten 15 vernichtet wird.

Bei der in Fig. 8 wiedergegebenen Ausführungsform besteht der gesamte Spritzschutzring aus Kunststoffmaterial und weist somit in unmontiertem Zustand nicht eine gestreckte sondern eine bereits vorgebogene, im wesentlichen einer Kreisform folgende Gestaltung auf. Das Spannband 1 und das C-Form-Federband 2 sind infolgedessen in einem Stück gespritzt, wobei in diesem Falle anstelle der durch Zusammenbiegung von Schlitzen gebildeten Öffnungen eine entsprechende Zahl von Lochdurchbrechungen 16 vorgesehen sind. Sowohl die Rastnasen 17 als auch der Schlitzraster 18 sind in diesem Falle unmittelbar in einem Stück an das Spannband 1 angespritzt, wobei die für die Montage und die Spannung erforderliche Elastizität im Material selbst liegt.

## Patentansprüche

1. Spritzschutzring für Rohrflansche aus einem die Flanschblätter (3) einer Rohrverbindung umspannenden, den Flanschspalt überdeckenden Spannband (1), dadurch gekennzeichnet, daß der zwischen dem Spannband (1), den Flanschblättern (3) und der Flanschdichtung eingeschlossene Raum durch Schikanen in miteinander derart verbundene Teilräume (4, 13) unterteilt ist, daß die infolge Dichtungsbruchs zwischen den Flanschblättern (3) ausströmende Flüssigkeit unter Umlenkung durch die Schikanen im Übergangsbereich zwischen den Räumen in einander entgegengerichtete und/oder sich kreuzende Teilströme geteilt wird.

2. Spritzschutzring nach Anspruch 1, dadurch gekennzeichnet, daß das Spannband (1) mit einem im wesentlichen C-förmigen Federband (2) versehen ist, das auf etwa seiner Mittellinie derart an dem Spannband (1) befestigt ist, daß es sich bei der Montage mit seinen Wölbungen beidseitig federnd gegen die inneren Flanschflächen anlegt, wobei das C-Form-Federband (2) beidseitig im Bereich der Abstützlinie (5) mit Durchbrechungen (6a) versehen ist.

3. Spritzschutzring nach Anspruch 2, dadurch gekennzeichnet, daß das Spannband (1) von einem Bandstahlstreifen gebildet und das C-Form-Federband (2) zur Bildung der Durchbrechungen (6a) beidseitig ausgehend von den freien Kanten mit sich bis über die Abstützlinie (5) hinaus erstreckenden Schlitzen (6) versehen ist.

4. Spritzschutzring nach Anspruch 3, dadurch gekennzeichnet, daß sich die von der Federbandkante ausgehenden Schlitze (6) in einem spitzen Winkel zur Federbandkante erstrecken.

5. Spritzschutzring nach Anspruch 2, dadurch gekennzeichnet, daß das Spannband von einem vorgeformten offenen Ring gebildet und das C-Form-Federband mit einer Vielzahl von Bohrungen versehen ist.

6. Spritzschutzring nach einem der Ansprüche 1 bis 5, dadurch gekennzeichnet, daß das Spannband (1) mit einer Sicke (7) versehen ist, an der das Federband (2) befestigt ist.

7. Spritzschutzring nach einem der Ansprüche 1 bis 6, dadurch gekennzeichnet, daß das Spannband (1) an seinem einen Ende mit einer federnden Rastnase (9) und auf seinem anderen Ende mit einem mehrere Schlitze (10) umfassenden Schlitzraster (11) versehen ist.

8. Spritzschutzring nach Anspruch 7, dadurch gekennzeichnet, daß der Schlitzraster (11) in einem solchen Abstand vom Spannbandende angeordnet ist, daß das freie Bandende ($L_1$) mindestens der Länge ($L_2$) des Schlitzrasters entspricht.

9. Spritzschutzring nach einem der Ansprüche 1 bis 8 dadurch gekennzeichnet, daß das Spannband (1) beidseitig parallel zum C-Form-Federband (2) mit rundumlaufenden Nuten (15) versehen ist.

## Claims

1. Spray protection ring for pipe flanges comprising a tension band (1) which clamps round the flange laminations of a pipe connection and covers the flange gap, characterised in that the chamber defined between the tension band (1), the flange laminations (3) and the flange seal is divided, by means of baffle plates, into partial chambers (4, 13) which are interconnected in such a manner that the liquid which escapes between the flange laminations (3) as a consequence of a fractured seal is deflected by means of the baffle plates in the transitional region between the chambers and is divided into partial streams which flow in opposite directions to one another and/or intersect.

2. Spray protection ring according to claim 1, characterised in that the tension band (1) is provided with a substantially C-shaped spring band (2) which is secured to the tension band (1) approximately on its centre line in such a manner that, when assembled, it abuts with its curved portions against the inner flange faces on both sides in a resilient manner, the C-shaped spring band (2) being provided with openings (6a) on both sides in the region of the support line (5).

3. Spray protection ring according to claim 2, characterised in that the tension band (1) is formed from a strip of band steel and, for the formation of the openings (6a), the C-shaped spring band (2) is provided on both sides, starting from the free edges, with slots (6) which extend beyond the support line (5).

4. Spray protection ring according to claim 3, characterised in that the slots (6) which start from the edge of the spring band, extend at an acute angle relative to the edge of the spring band.

5. Spray protection ring according to claim 2, characterised in that the tension band is formed from a preformed, open ring and the C-shaped spring band is provided with a plurality of bores.

6. Spray protection ring according to one of claims 1 to 5, characterised in that the tension band (1) is provided with a bead/channel (7) to which the spring band (2) is secured.

7. Spray protection ring according to one of claims 1 to 6, characterised in that one end of the tension band (1) is provided with a resilient locking projection member (9) and its other end is provided with a slotted screen (11) which includes a plurality of slots (10).

8. Spray protection ring according to claim 7, characterised in that the slotted screen (11) is disposed at such a distance from the end of the tension band that the free end ($L_1$) of the band corresponds to at least the length ($L_2$) of the slotted screen.

9. Spray protection ring according to one of claims 1 to 8, characterised in that the tension band (1) is provided with encircling grooves (15) on both sides parallel to the C-shaped spring band (2).

## Revendications

1. Anneau de protection contre les projections pour brides de tuyaux, constitué par une bande de serrage (1) qui enserre les flasques de bride (3) d'un raccord de tuyaux, caractérisé en ce que le volume délimité entre la bande de serrage (1), les flasques de bride (3) et la garniture d'étanchéité des brides est subdivisé par des chicanes en volumes partiels (4, 13) qui communiquent entre eux de telle manière que le liquide qui s'échappe entre les flasques de bride (3) en conséquence d'une rupture de la garniture d'étanchéité soit divisé avec changement de direction, par les chicanes, dans la région de passage entre ces volumes, en courants partiels qui sont dirigés en sens opposés et/ou se croisent.

2. Anneau de protection contre les projections selon la revendication 1, caractérisé en ce que la bande de serrage (1) est munie d'une bande à ressort (2) ayant essentiellement la forme d'un C qui est fixée à la bande de serrage (1) à peu près par son axe médian, de telle manière que lors du montage, elle s'applique à ressort des deux côtés par ses bombures contre les surfaces internes des brides, la bande à ressort en C (2) présentant des découpures (6a) des deux côtés dans la région de la ligne d'appui (5).

3. Anneau de protection contre les projections selon la revendication 2, caractérisé en ce que la bande de serrage (1) est formée par une bande d'acier feuillard et la bande à ressort en forme de C (2) est munie des deux côtés, pour la formation des découpures (6a), de fentes (6) qui s'étendent, à partir des bords libres, jusqu'au-delà de la ligne d'appui (5).

4. Anneau de protection contre les projections selon la revendication 3, caractérisé en ce que les fentes (6) qui partent du bord de la bande à ressort s'étendent en formant un angle aigu avec le bord de la bande à ressort.

5. Anneau de protection contre les projections selon la revendication 2, caractérisé en ce que la bande de serrage est constituée par un anneau ouvert pré-formé et la bande à ressort en forme de C est munie d'une multiplicité de perforations.

6. Anneau de protection contre les projections selon l'une quelconque des revendications 1 à 5, caractérisé en ce que la bande de serrage (1) est munie d'une moulure (7) à laquelle est fixée la bande à ressort (2).

7. Anneau de protection contre les projections selon l'une quelconque des revendications 1 à 6, caractérisé en ce que la bande de serrage (1) est munie, à l'une de ses extrémités d'un ergot d'encliquetage à ressort (9) et, à son autre extrémité, d'une lame crantée d'enclenchement (11) comprenant plusieurs encoches (10).

8. Anneau de protection contre les projections selon la revendication 7, caractérisé en ce que la lame crantée d'enclenchement (11) est disposée à une distance de l'extrémité de la bande de serrage telle que le bout libre ($L_1$) de la bande corresponde au moins à la longueur ($L_2$) de la lame crantée d'enclenchement.

9. Anneau de protection contre les projections selon l'une quelconque des revendications 1 caractérisé en ce que la bande de serrage (1) presente, des deux côtés de la bande élastique en forme de C et parallèlement à celle-ci, des gorges (15) qui s'étendent tout autour.

# Fig. 1

# Fig. 2

0 080 654

Fig. 3

Fig. 4

Fig. 6

Fig. 5

Fig. 7

Fig. 8